# EUROPEAN PATENT APPLICATION

(11) **EP 4 794 013 A1**
(43) Date of publication of application: **19.08.2026**
(21) Application number: 25861694.5
(22) Date of filing: 21.03.2025
(51) Int. Cl.: H01M 4/133

(54) **NEGATIVE ELECTRODE SHEET, SECONDARY BATTERY AND ELECTRICAL APPARATUS**

(30) Priority: 31.12.2024 CN 202411978654
(71) Applicant: ZHEJIANG LIWINON ENERGY TECHNOLOGY CO., LTD., Jinhua, Zhejiang 321000 (CN)
(72) Inventor: Jiang, Wei, Jinhua, Zhejiang 321000 (CN); Wu, Shengben, Jinhua, Zhejiang 321000 (CN); Chen, Jie, Jinhua, Zhejiang 321000 (CN)
(74) Representative: Metida
(86) International application number: PCT/CN2025/084065
(87) International publication number: WO 2026/143869

(57) **Abstract**

The present disclosure provides a negative electrode, a secondary battery, and an electric device, and belongs to the technical field of batteries. By controlling volume median particle sizes Dv50 of a first negative electrode active material and a second negative electrode active material in a negative electrode active material, a grading ratio (X) of the negative electrode active material, a tensile strength of the negative electrode, and a content of a first binder in the negative electrode active material layer to satisfy the following relationship: 0.69 ≤ (A + B) × X/(N × C) ≤ 160, the present disclosure can effectively enhance the adhesion and electrical conductivity of the negative electrode and effectively suppress the expansion and contraction of the negative electrode active material, thereby improving the stability of the negative electrode active material. This design enables the negative electrode active material to be uniformly distributed on the negative electrode, shortens the migration and diffusion path of lithium ions in the negative electrode active material, and reduces the resistance of the secondary battery while improving the cycling performance of the secondary battery.

## Description

### TECHNICAL FIELD

The present disclosure relates to the technical field of batteries, and specifically to a negative electrode, a secondary battery, and an electric device.

### BACKGROUND

With the development of the information industry and electronic technology, advanced requirements have been put forward for battery power sources. Compared to other secondary battery systems, lithium-ion batteries have advantages such as low self-discharge, high energy density, high operating voltage, long cycling life, and environmental friendliness, and can meet the development needs of green batteries. Consequently, lithium-ion batteries have become a research focus in recent years.

Silicon-based negative electrode materials have garnered widespread attention from researchers due to high specific capacity and high voltage plateau. However, during the actual commercialization process, the silicon-based negative electrode materials are prone to volume expansion during charge-discharge cycles, which leads to issues such as electrolyte consumption and active lithium loss. As a result, the corresponding batteries are faced with problems such as poor cycling life, severe gas generation during high-temperature storage, and high resistance when in use.

In view of this, the present disclosure is proposed.

### SUMMARY

An objective of the present disclosure is to overcome the shortcomings existing in the prior art and provide a negative electrode, a secondary battery, and an electric device. The present disclosure effectively improves the first-cycle Coulombic efficiency and cycling performance and reduces the resistance of a secondary battery.

To achieve the above objective, in a first aspect of the present disclosure, provided is a negative electrode, including: a negative electrode current collector and a negative electrode active material layer arranged on at least one surface of the negative electrode current collector, where the negative electrode active material layer includes a negative electrode active material and a first binder;
the negative electrode active material includes a first negative electrode active material and a second negative electrode active material; and
the negative electrode satisfies a relationship of 0.69 ≤ (A + B) × X/(N × C) ≤ 160, and X = A/B;
where A represents a volume median particle size Dv50 of the first negative electrode active material, in µm;
B represents a volume median particle size Dv50 of the second negative electrode active material, in µm; N represents a tensile strength of the negative electrode, in MPa; and
C represents a weight percentage of the first binder in the negative electrode active material layer, in %.

In an embodiment of the present disclosure, the negative electrode satisfies at least one selected from the group consisting of (1) to (5) as follows:
$0.4 μm \leq A \leq 8 μm ;$
$10 μm \leq B \leq 45 μm ;$
$0.01 \leq X \leq 0.8 ;$
$0.1 MPa \leq N \leq 0.5 MPa ;$ and
$0.05 % ⩽ C ⩽ 10 % .$

In an embodiment of the present disclosure, the first binder includes at least one selected from the group consisting of polytetrafluoroethylene and/or a derivative thereof, polyvinylidene fluoride (PVDF) and/or a derivative thereof, carboxymethyl cellulose and/or a derivative thereof, nitrocellulose and/or a derivative thereof, styrene-butadiene rubber and/or a derivative thereof, nitrile-butadiene rubber and/or a derivative thereof, and polyacrylic acid and/or a derivative thereof.

In an embodiment of the present disclosure, a weight percentage of the first negative electrode active material in the negative electrode active material layer is defined as D, and 1% ≤ D ≤ 30%; and/or
a weight percentage of the second negative electrode active material in the negative electrode active material layer is defined as E, and 60% ≤ E ≤ 98.9%.

In an embodiment of the present disclosure, the negative electrode active material includes a core and a coating layer arranged on an outer surface of the core; the core includes a silicon-based material and graphite; the coating layer includes a second binder and a conductive agent; and a mass ratio of the silicon-based material, the graphite, the second binder, and the conductive agent is (1-30):(69.4-95):(0.3-3):(0.1-1).

In an embodiment of the present disclosure, the coating layer includes polyacrylic acid and/or a derivative thereof, styrene-butadiene rubber and/or a derivative thereof, carboxymethyl cellulose and/or a derivative thereof, and the conductive agent; and a mass ratio of the silicon-based material, the graphite, the polyacrylic acid and/or the derivative thereof, the styrene-butadiene rubber and/or the derivative thereof, the carboxymethyl cellulose and/or the derivative thereof, and the conductive agent is (1-30):(69.4-95):(0.1-1):(0.1-1):(0.1-1):(0.1-1).

In an embodiment of the present disclosure, the silicon-based material includes at least one selected from the group consisting of a silicon-oxygen material and a silicon-carbon material.

In an embodiment of the present disclosure, the conductive agent includes at least one selected from the group consisting of a carbon nanotube, carbon black, a carbon dot, graphene, and a carbon nanofiber.

In an embodiment of the present disclosure, the second binder includes at least one selected from the group consisting of polytetrafluoroethylene and/or a derivative thereof, PVDF and/or a derivative thereof, carboxymethyl cellulose and/or a derivative thereof, nitrocellulose and/or a derivative thereof, styrene-butadiene rubber and/or a derivative thereof, nitrile-butadiene rubber and/or a derivative thereof, and polyacrylic acid and/or a derivative thereof.

In a second aspect of the present disclosure, provided is a secondary battery, including the negative electrode described above.

In a third aspect of the present disclosure, provided is an electric device, including the secondary battery described above.

The present disclosure has the following beneficial effects: By controlling the volume median particle sizes Dv50 of the first negative electrode active material and the second negative electrode active material in the negative electrode active material, the grading ratio (X) of the negative electrode active material, the tensile strength of the negative electrode, and the content of the first binder in the negative electrode active material layer to satisfy the following relationship: 0.69 ≤ (A + B) × X/(N × C) ≤ 160, the present disclosure can effectively enhance the adhesion and electrical conductivity of the negative electrode, effectively suppress the expansion and contraction of the negative electrode active material, boost the ion conductivity of the negative electrode, and improve the dispersion effect of the first binder to avoid agglomeration. In addition, the present disclosure can improve the stability of the negative electrode active material, prevent the pulverization of the negative electrode and the fragmentation of the negative electrode active material during the fabrication of the negative electrode, increase the compaction density, facilitate the uniform distribution of the negative electrode active material on the negative electrode, and shorten the migration and diffusion path of active ions in the negative electrode active material, thereby reducing the resistance of the secondary battery and effectively improving the first-cycle Coulombic efficiency and cycling performance of the secondary battery.

### DETAILED DESCRIPTION

To make the objective, technical solutions, and advantages of the present disclosure clear, the technical solutions in the embodiments of the present disclosure will be described clearly and completely below. Apparently, the described embodiments are some rather than all of the embodiments of the present disclosure. All other embodiments obtained by those of ordinary skill in the art based on the embodiments of the present disclosure without creative efforts should fall within the protection scope of the present disclosure.

In the present disclosure, open-ended technical features include a close-ended technical solution composed of the listed features, and also include an open-ended technical solution including the listed features.

In the present disclosure, unless otherwise specified, any numerical range is considered continuous, and includes minimum and maximum values of the numerical range and any value between the minimum and maximum values. Further, when the numerical range refers to integers, any integer between the minimum and maximum values of the numerical range is included. Additionally, when a plurality of ranges are provided to describe a feature or characteristic, the plurality of ranges can be combined. In other words, unless otherwise indicated, all ranges disclosed herein shall be understood to encompass any and all sub-ranges belonging to the ranges.

In the present disclosure, there is no special limitation on the specific dispersion and stirring methods.

Unless otherwise specified, all components, raw materials, or instruments adopted in the examples and comparative examples of the present disclosure are commercially available, and components and raw materials of the same types are adopted in parallel experiments.

In addition, the terms such as "first" and "second" are used only for the purpose of description and should not be construed as indicating or implying a relative importance, or implicitly indicating a quantity of the mentioned technical features. Therefore, features defined by "first" and "second" may explicitly or implicitly include at least one of the features. In the description of the present disclosure, "a plurality of" means at least two, such as two or three, unless otherwise clearly and specifically limited.

The inventors of the present disclosure have found through research that the existing dry-process silicon-based negative electrode is obtained by fibrillating a mixed powder of an active material, a conductive agent and a binder, then rolling a fibrillated powder to form a self-supporting film, and then combining the self-supporting film with a current collector to finally obtain the dry-process silicon-based negative electrode. In the dry-process silicon-based negative electrode, the binder reacts with lithium ions on a surface of the negative electrode to form lithium fluoride, which weakens the adhesive effect, reduces the capacity of a secondary battery, and severely compromises the cycling stability of a secondary battery. Moreover, because the expansion of the above-mentioned silicon-based negative electrode can hardly be inhibited, a conductive network and an adhesive network within the silicon-based negative electrode may collapse due to silicon expansion during the charge and discharge process of a battery cell of a secondary battery, thereby resulting in the pulverization of the silicon-based negative electrode, and ultimately the failure of the battery cell of the secondary battery.

Therefore, to address the aforementioned issues, in an embodiment of the present disclosure, provided is a negative electrode, including: a negative electrode current collector and a negative electrode active material layer arranged on at least one surface of the negative electrode current collector. The negative electrode active material layer includes a negative electrode active material and a first binder.

The negative electrode active material includes a first negative electrode active material and a second negative electrode active material.

The negative electrode satisfies a relationship of 0.69 ≤ (A + B) × X/(N × C) ≤ 160, and X = A/B. For example, (A + B) × X/(N × C) can be equal to any value selected from the group consisting of 0.69, 0.7, 1, 2, 4, 5, 6, 10, 20, 30, 40, 50, 60, 70, 80, 90, 100, 110, 120, 130, 140, 150, and 160, or a range defined by any two of the aforementioned values.
A represents a volume median particle size Dv50 of the first negative electrode active material, in µm;
B represents a volume median particle size Dv50 of the second negative electrode active material, in µm;
N represents a tensile strength of the negative electrode, in MPa; and
C represents a weight percentage of the first binder in the negative electrode active material layer, in %.

The inventors of the present disclosure have found through research that the properties of the negative electrode are significantly correlated with the volume median particle sizes Dv50 of the negative electrode active material, a grading ratio (X) of the negative electrode active material, the tensile strength of the negative electrode, and the content of the first binder in the negative electrode active material layer. By controlling the volume median particle sizes Dv50 of the first negative electrode active material and the second negative electrode active material in the negative electrode active material, the grading ratio (X) of the negative electrode active material, the tensile strength of the negative electrode, and the content of the first binder in the negative electrode active material layer to satisfy the following relationship: 1.5 ≤ (A + B) × X/(N × C) ≤ 5, the present disclosure can effectively enhance the adhesion and electrical conductivity of the negative electrode, effectively suppress the expansion and contraction of the negative electrode active material, boost the ion conductivity of the negative electrode, improve the dispersion effect of the first binder to avoid agglomeration, and reduce the amount of lithium fluoride generated on a surface of the negative electrode. In addition, the present disclosure can improve the stability of the negative electrode active material, prevent the pulverization of the negative electrode, facilitate the uniform distribution of the negative electrode active material on the negative electrode, and shorten the migration and diffusion path of active ions in the negative electrode active material, thereby reducing the resistance of a secondary battery and effectively improving the first-cycle Coulombic efficiency and cycling performance of the secondary battery.

In the present disclosure, the volume median particle sizes Dv50 of the first negative electrode active material and the second negative electrode active material each have meanings well known in the art, and represent a particle size at which a cumulative volume distribution percentage of a material reaches 50%. The volume median particle sizes can be measured by instruments and methods well known in the art. For example, a cross section including the first negative electrode active material and the second negative electrode active material is fabricated using a cross-section polisher (such as the IB-09010CP argon ion cross-section polisher from JEOL, Japan); then an elemental analysis is performed by energy-dispersive X-ray spectrometry (EDX) or energy-dispersive X-ray spectrometry (EDS); the cross section is further subjected to area scanning by transmission electron microscopy (TEM) or scanning electron microscopy (SEM) (for example, the X-Max EDS from Oxford Instruments PLC, UK is used in combination with the Sigma-02-33 SEM from CARL ZEISS AG, Germany) to obtain an elemental distribution map of the cross section; the volume median particle sizes Dv50 of the first negative electrode active material and the second negative electrode active material are determined based on a particle size distribution of the cross section. More accurately, volume median particle sizes Dv50 of the first negative electrode active material or the second negative electrode active material at a plurality of (3 or more, such as 8, 10, and 12) different locations on the cross section can be measured, and then an average value is taken and recorded as a volume median particle size Dv50 of the first negative electrode active material or the second negative electrode active material.

In an embodiment, 1.6 ≤ (A + B) × X/(N × C) ≤ 9.6. By controlling the (A + B) × X/(N × C) within this range, the resistance of a secondary battery can be further reduced to enhance the cycling performance of the secondary battery.

In an embodiment, 0.4 µm ≤ A ≤ 8 µm. For example, the volume median particle size Dv50 (A) of the first negative electrode active material may be any one selected from the group consisting of 0.4 µm, 0.5 µm, 1 µm, 2 µm, 3 µm, 4 µm, 5 µm, 6 µm, 7 µm, and 8 µm, or a range defined by any two of the aforementioned values.

In an embodiment, 1 µm ≤ A ≤ 8 µm.

In an embodiment, 10 µm ≤ B ≤ 45 µm. For example, the volume median particle size Dv50 (B) of the second negative electrode active material may be any one selected from the group consisting of 10 µm, 12 µm, 14 µm, 15 µm, 18 µm, 20 µm, 22 µm, 24 µm, 25 µm, 26 µm, 28 µm, 30 µm, 35 µm, 40 µm, and 45 µm, or a range defined by any two of the aforementioned values.

In an embodiment, 10 µm ≤ B ≤ 30 µm.

By controlling A and B within the above respective ranges, the wettability of an electrolyte to the negative electrode active material can be effectively improved, and the negative electrode active material can be in full contact with the electrolyte to create increased active sites, thereby mitigating the volume expansion caused by lithium-ion intercalation/deintercalation.

In an embodiment, 0.01 ≤ X ≤ 0.8. For example, X may be any one selected from the group consisting of 0.01, 0.03, 0.033, 0.04, 0.05, 0.08, 0.1, 0.2, 0.3, 0.4, 0.5, 0.6, 0.7, and 0.8, or a range defined by any two of the aforementioned values. When X falls within the range specified above, particle pores of the negative electrode active material can be maximally filled to effectively increase the compaction density of the negative electrode active material, enhance the wettability of an electrolyte to the negative electrode active material, efficiently reduce the interfacial side reactions, and minimize the gas generation of a secondary battery. Consequently, the resistance of the secondary battery can be effectively lowered and the cycling performance of the secondary battery can be improved.

In an embodiment, 0.033 ≤ X ≤ 0.8.

In an embodiment, 0.1 MPa ≤ N ≤ 0.5 MPa. For example, N may be any one selected from the group consisting of 0.1 MPa, 0.2 MPa, 0.3 MPa, 0.4 MPa, and 0.5 MPa, or a range defined by any two of the aforementioned values. Controlling the tensile strength of the negative electrode within this range can efficiently enhance the stability of the negative electrode, guarantee the formation of a robust conductive network, maintain the excellent electron transport capability between a carbon-based material and graphite, and shorten the diffusion path of lithium ions, thereby effectively improving the cycling performance of a secondary battery.

In the present disclosure, the tensile strength of the negative electrode is tested by a tensile tester.

The tensile strength of the negative electrode is tested under the following parameters: Speed: 20 mm/min, Gauge length: 50 mm, Sample width: 4 mm, and Sample thickness: P.

The tensile strength of the negative electrode is calculated according to the following formula: N = tensile force F/(0.004 × P).

In an embodiment, 0.1% ≤ C ≤ 10%. For example, C may be any one selected from the group consisting of 0.1%, 0.2%, 0.5%, 0.8%, 1%, 2%, 3%, 4%, 5%, 6%, 7%, 8%, 9%, and 10%, or a range defined by any two of the aforementioned values. Controlling C in this range can effectively improve the electrical conductivity and processability of the negative electrode and effectively suppress the expansion and contraction of the negative electrode active material, thereby significantly enhancing the cycling performance of a secondary battery.

In an embodiment, the first binder includes at least one selected from the group consisting of polytetrafluoroethylene and/or a derivative thereof, PVDF and/or a derivative thereof, carboxymethyl cellulose and/or a derivative thereof, nitrocellulose and/or a derivative thereof, styrene-butadiene rubber and/or a derivative thereof, nitrile-butadiene rubber and/or a derivative thereof, and polyacrylic acid and/or a derivative thereof.

In an embodiment, a weight percentage of the first negative electrode active material in the negative electrode active material layer is defined as D, and 1% ≤ D ≤ 30%. For example, the weight percentage D of the first negative electrode active material in the negative electrode active material layer may be any one selected from the group consisting of 1%, 2%, 3%, 5%, 8%, 10%, 12%, 15%, 18%, 20%, 22%, 25%, 28%, and 30%, or a range defined by any two of the aforementioned values.

In an embodiment, a weight percentage of the second negative electrode active material in the negative electrode active material layer is defined as E, and 60% ≤ E ≤ 98.9%. For example, the weight percentage E of the second negative electrode active material in the negative electrode active material layer may be any one selected from the group consisting of 60%, 65%, 70%, 75%, 80%, 85%, 90%, 95%, 98%, and 98.9%, or a range defined by any two of the aforementioned values.

In an embodiment, the negative electrode active material includes a core and a coating layer arranged on an outer surface of the core. The core includes a silicon-based material and graphite. The coating layer includes a second binder and a conductive agent. A mass ratio of the silicon-based material, the graphite, the second binder, and the conductive agent is (1-30):(69.4-95):(0.3-3):(0.1-1). By coating an outer surface of the negative electrode active material with a coating layer including a binder and a conductive agent (that is, the conductive agent is added), the agglomeration of the conductive agent and the first binder can be prevented to avoid non-uniform dispersion, the dispersibility of the conductive agent and the first binder in the negative electrode can be boosted, the stability, electrical conductivity, and adhesion of the negative electrode active material can be remarkably improved, and the expansion and contraction of the negative electrode active material can be markedly mitigated, which can raise the cycling stability of a secondary battery.

In an embodiment, the coating layer includes polyacrylic acid and/or a derivative thereof, styrene-butadiene rubber and/or a derivative thereof, carboxymethyl cellulose and/or a derivative thereof, and the conductive agent, and a mass ratio of the silicon-based material, the graphite, the polyacrylic acid and/or the derivative thereof, the styrene-butadiene rubber and/or the derivative thereof, the carboxymethyl cellulose and/or the derivative thereof, and the conductive agent is (1-30):(69.4-95):(0.1-1):(0.1-1):(0.1-1):(0.1-1). When such a coating layer is applied, the polyacrylic acid and/or the derivative thereof, the styrene-butadiene rubber and/or the derivative thereof, the carboxymethyl cellulose and/or the derivative thereof, and the conductive agent are coated on a surface of the negative electrode active material, which can boost the electrical conductivity and adhesion of the negative electrode active material. In the subsequent procedures, that is, during the mixing process of the negative electrode active material with the first binder, the amount of the first binder added can be reduced to further enhance the first-cycle Coulombic efficiency of the negative electrode and prevent the agglomeration of the first binder and the conductive agent. Moreover, since the surface of the active material is coated with rigid binders such as polyacrylic acid, styrene-butadiene rubber, and carboxymethyl cellulose, the combined action of these rigid binders with the first binder results in the tight contact among particles of the active material, reduces the ion transport distance, and shortens the charging time of a battery. Thus, the negative electrode can not only inhibit silicon expansion, but also address the issue of electrode pulverization, thereby enhancing the cycling stability of a battery.

In an embodiment, the silicon-based material includes at least one selected from the group consisting of a silicon-oxygen material and a silicon-carbon material.

In an embodiment, the silicon-based material includes at least one selected from the group consisting of silicon, a silicon-carbon composite, and SiOₓ.

In an embodiment, the conductive agent includes at least one selected from the group consisting of a carbon nanotube, carbon black, a carbon dot, graphene, and a carbon nanofiber.

In an embodiment, the second binder includes at least one selected from the group consisting of polytetrafluoroethylene and/or a derivative thereof, PVDF and/or a derivative thereof, carboxymethyl cellulose and/or a derivative thereof, nitrocellulose and/or a derivative thereof, styrene-butadiene rubber and/or a derivative thereof, nitrile-butadiene rubber and/or a derivative thereof, and polyacrylic acid and/or a derivative thereof.

For example, a preparation method of the negative electrode active material includes the following steps:

evenly mixing the silicon-based material with the graphite to obtain a mixture; evenly mixing the mixture with the second binder and the conductive agent to obtain a precursor material; adding water to the precursor material to prepare a slurry with a solid content of 20% to 60%; subjecting the slurry to atomization and granulation at a temperature of 150 °C to 200 °C, ball-milling, and sieving to obtain the first negative electrode active material and the second negative electrode active material (an aperture size of an atomizer for the atomization and granulation and the ball-milling and sieving steps are controlled to obtain negative electrode active materials with different Dv50 values).

In an embodiment, the secondary battery further includes a positive electrode.

In an embodiment, the positive electrode includes a positive electrode current collector and a positive electrode active material layer arranged on at least one surface of the positive electrode current collector. The positive electrode active material layer includes a positive electrode active material.

In an embodiment, the positive electrode active material is a positive electrode active material commonly known in the art for the secondary battery. As a non-limiting example, the positive electrode active material may include a lithium-containing phosphate, a lithium transition metal oxide, and modified compounds thereof. However, in the present disclosure, the positive electrode active material is not limited to these materials or substances, and may also include other conventional materials or substances that can be used as positive electrode active materials for the secondary battery. The positive electrode active material may be any single material or substance or a combination of two or more materials or substances. As a non-limiting example, the lithium transition metal oxide may include, but is not limited to, any one or more selected from the group consisting of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof.

In an embodiment, a type of the positive electrode current collector is not particularly limited, and any known material suitable for the positive electrode current collector may be adopted. In an embodiment, the positive electrode current collector may include, but is not limited to, at least one selected from the group consisting of metal materials such as aluminum, stainless steel, nickel plating, titanium, and tantalum and carbon materials such as carbon cloth and carbon paper.

The present disclosure has no special limitation on a form of the positive electrode current collector. When the positive electrode current collector is made of a metal material, the positive electrode current collector may be in a form of a metal foil, a metal cylinder, a metal strip or coil, a metal plate, a tinsel, a metal mesh, a stamped metal, a metal foam, etc. When the positive electrode current collector is made of a carbon material, the positive electrode current collector may be in a form of, but is not limited to, a carbon plate, a carbon film, and a carbon cylinder.

In an embodiment, the positive electrode active material layer further includes a positive electrode conductive agent and a positive electrode binder.

In an embodiment, the present disclosure has no limitation on a type of the positive electrode conductive agent, and any known positive electrode conductive agent may be adopted.

In an embodiment, the positive electrode conductive agent includes at least one selected from the group consisting of carbon materials such as superconducting carbon, acetylene black, carbon black, Ketjenblack, a carbon dot, a carbon nanotube, graphene, and a carbon nanofiber.

In an embodiment, the present disclosure has no limitation on a type of the positive electrode binder.

In an embodiment, the positive electrode binder includes at least one selected from the group consisting of PVDF, polytetrafluoroethylene, a vinylidene fluoride-tetrafluoroethylene-propylene ternary copolymer, a vinylidene fluoride-hexafluoropropylene-tetrafluoroethylene ternary copolymer, a tetrafluoroethylene-hexafluoropropylene copolymer, a fluorine-containing acrylate resin, polyethylene (PE), polypropylene, polyethylene terephthalate, polymethyl methacrylate, polyimide, aramid, cellulose, nitrocellulose, styrene-butadiene rubber, nitrile-butadiene rubber, fluoroelastomer, isoprene rubber, polybutadiene rubber, and ethylene-propylene rubber.

In the secondary battery provided in the present disclosure, a separator is typically provided between the positive electrode and the negative electrode to prevent short circuits. A material and a shape of the separator are not specially limited, as long as the effect of the present disclosure is not significantly impaired.

In an embodiment, the separator includes a porous sheet-like material or a non-woven fabric-like material with excellent electrolyte retention properties. In an embodiment, the separator may be a resin or glass fiber separator. A material of the resin or glass fiber separator includes, but is not limited to, polyolefin, aramid, polytetrafluoroethylene, and polyethersulfone.

In an embodiment, the polyolefin is PE or polypropylene. In some embodiments, the polyolefin is polypropylene. The above materials for the separator may be used alone or in any combination.

In an embodiment, the secondary battery can include an outer packaging configured to encapsulate the negative electrode, the positive electrode, the separator, and an electrolyte.

In an embodiment, a type of the electrolyte is also not specifically limited. The electrolyte includes an electrolyte salt and an organic solvent. Specific types of the electrolyte salt and the organic solvent are not particularly limited and may be selected according to actual needs. The electrolyte may further include an additive. A type of the additive is not particularly limited and may be a film-forming additive for the positive electrode and/or the negative electrode. Additives capable of improving some properties of the secondary battery may also be selected, such as an additive for enhancing high-temperature or low-temperature performance of the secondary battery.

In an embodiment, the outer packaging of the secondary battery may be a hard casing, such as a hard plastic casing, an aluminum casing, and a steel casing. The outer packaging of the secondary battery can also be a soft packaging, such as a pouch soft packaging. A material of the soft packaging can be a plastic, such as polypropylene, polybutylene terephthalate, and polybutylene succinate.

In the present disclosure, there is no special limitation on a shape of the secondary battery, and the secondary battery may be in a cylindrical shape, a square shape, or any other shape.

In an embodiment of the present disclosure, provided is an electric device including the secondary battery described above.

For example, the electric device may include a mobile device (such as a mobile phone and a laptop), an electric vehicle (such as a pure electric vehicle, a hybrid electric vehicle, a plug-in hybrid electric vehicle, an electric bicycle, an electric scooter, an electric golf cart, and an electric truck), an electric train, a ship, a satellite system, and an energy storage system, but is not limited thereto.

The following examples are provided to facilitate the comprehension of the present disclosure, and are not intended to limit the scope defined by the claims.

### Example 1

A preparation method of a secondary battery is provided, including the following steps:

### (1) Preparation of a negative electrode active material:

A silicon-based material was thoroughly mixed with graphite to obtain a mixture. The silicon-based material was preferably a silicon-carbon material. Then, the mixture was thoroughly mixed with polyacrylic acid, carboxymethyl cellulose, styrene-butadiene rubber, and a carbon nanotube to obtain a precursor material. Water was added to the precursor material to prepare a slurry with a solid content of 40%. The slurry was subjected to atomization and granulation at 180 °C, ball-milling, and sieving to obtain a first negative electrode active material and a second negative electrode active material (an aperture size of an atomizer for the atomization and granulation and the ball-milling and sieving steps were controlled to obtain the first negative electrode active material and the second negative electrode active material with different volume median particle sizes Dv50).

A mass ratio of the silicon-based material, the graphite, the polyacrylic acid, the carboxymethyl cellulose, the styrene-butadiene rubber, and the carbon nanotube was 5:93:0.5:0.5:0.5:0.5.

(2) Preparation of a negative electrode: The first negative electrode active material, the second negative electrode active material, and polytetrafluoroethylene were added to a mixing tank at a mass ratio of 15:80:5, and stirred according to the following stirring procedures to obtain a mixed material:
The stirring was conducted at 15 °C for 120 s with a reverse rotation (of an agitator blade) at 300 rpm and a forward rotation (of the tank) at 45 rpm.

Then, the stirring was conducted at 15 °C for 120 s with a reverse rotation (of the agitator blade) at 2,500 rpm and a forward rotation (of the tank) at 45 rpm.

Further, the stirring was conducted at 65 °C for 900 s with a reverse rotation (of the agitator blade) at 5,000 rpm and a forward rotation (of the tank) at 45 rpm.

The mixed material was processed at 120°C through a roll gap between upper and lower rolls with a linear speed ratio of 0.7 to form a film with a thickness of 100 µm (the thickness of the film could be controlled by adjusting a number of times this step was repeated).

The film was laminated to an 8 µm-thick copper foil current collector at 120°C through a roll gap between upper and lower rolls with the same linear speed.

(3) Preparation of a positive electrode: Lithium cobalt oxide as a positive electrode active material, PVDF, carbon black SP (a mass ratio of the lithium cobalt oxide, the PVDF, and the carbon black SP was 8:1:1), and *N*-methylpyrrolidone (NMP) were mixed to prepare a positive electrode slurry with a solid content of 70%. The positive electrode slurry was then coated onto a 9 µm-thick aluminum foil to obtain the positive electrode with a surface density of 19.48 mg/cm².

(4) Separator: A PE separator with a 16 µm-thick substrate membrane was adopted.

(5) Preparation of an electrolyte: Ethylene carbonate (EC) and dimethyl carbonate (DMC) were mixed in a volume ratio of 1:1. Subsequently, in a glovebox, lithium hexafluorophosphate was then added to obtain a lithium hexafluorophosphate electrolyte with a concentration of 1 mol/L.

(6) Assembly of the secondary battery: The positive electrode, the separator, and the negative electrode were stacked sequentially with the separator arranged between the positive electrode and the negative electrode, and winding, hot-press forming, and tab welding were conducted to obtain a bare battery cell. The bare battery cell was then placed in an aluminum-plastic film outer packaging and baked in an oven at 85±10°C for 24 h to obtain a dried battery. Subsequently, the lithium hexafluorophosphate electrolyte prepared above was injected into the dried battery. Standing, formation, and capacity grading were conducted to obtain the secondary battery.

The relevant parameters for Example 1 were shown in Table 1.

### Examples 2 to 5

Examples 2 to 5 were different from Example 1 in that the mass ratio of the first negative electrode active material, the second negative electrode active material, and the polytetrafluoroethylene in the step (2) was adjusted to change the weight percentage of the first binder in the negative electrode active material layer, that is, a value of C was adjusted.

In Example 2, the mass ratio of the first negative electrode active material, the second negative electrode active material, and the polytetrafluoroethylene was 15:84.9:0.1.

In Example 3, the mass ratio of the first negative electrode active material, the second negative electrode active material, and the polytetrafluoroethylene was 15:83:2.

In Example 4, the mass ratio of the first negative electrode active material, the second negative electrode active material, and the polytetrafluoroethylene was 15:77:8.

In Example 5, the mass ratio of the first negative electrode active material, the second negative electrode active material, and the polytetrafluoroethylene was 15:75:10.

### Examples 6 to 13

Examples 6 to 13 were different from Example 1 in that, in the step (1), the aperture size of the atomizer for the atomization and granulation and the ball-milling and sieving steps were adjusted to obtain the first negative electrode active material and the second negative electrode active material with different volume median particle sizes Dv50, so as to change the volume median particle size Dv50 (A) of the first negative electrode active material and/or the volume median particle size Dv50 (B) of the second negative electrode active material.

### Examples 14 to 17

Examples 14 to 17 were different from Example 1 in that, in the step (2), the tensile strength of the negative electrode was adjusted by changing the thickness of the film, that is, a value of N was adjusted.

### Examples 18 to 21

Examples 18 to 21 were different from Example 1 in that the mass ratio of the first negative electrode active material, the second negative electrode active material, and the polytetrafluoroethylene in the step (2) was adjusted.

In Example 18, the mass ratio of the first negative electrode active material, the second negative electrode active material, and the polytetrafluoroethylene was 1:94:5.

In Example 19, the mass ratio of the first negative electrode active material, the second negative electrode active material, and the polytetrafluoroethylene was 10:85:5.

In Example 20, the mass ratio of the first negative electrode active material, the second negative electrode active material, and the polytetrafluoroethylene was 20:75:5.

In Example 21, the mass ratio of the first negative electrode active material, the second negative electrode active material, and the polytetrafluoroethylene was 30:65:5.

### Examples 22 to 28

Examples 22 to 26 were different from Example 1 in that the mass ratio of the silicon-based material, the graphite, the polyacrylic acid, the carboxymethyl cellulose, the styrene-butadiene rubber, and the carbon nanotube in the step (1) was adjusted.

In Example 22, the mass ratio of the silicon-based material, the graphite, the polyacrylic acid, the carboxymethyl cellulose, the styrene-butadiene rubber, and the carbon nanotube was 1:95:1:1:1:1.

In Example 23, the mass ratio of the silicon-based material, the graphite, the polyacrylic acid, the carboxymethyl cellulose, the styrene-butadiene rubber, and the carbon nanotube was 2:94.8:0.8:0.8:0.8:0.8.

In Example 24, the mass ratio of the silicon-based material, the graphite, the polyacrylic acid, the carboxymethyl cellulose, the styrene-butadiene rubber, and the carbon nanotube was 10:88.4:0.4:0.4:0.4:0.4.

In Example 25, the mass ratio of the silicon-based material, the graphite, the polyacrylic acid, the carboxymethyl cellulose, the styrene-butadiene rubber, and the carbon nanotube was 20:79.2:0.2:0.2:0.2:0.2.

In Example 26, the mass ratio of the silicon-based material, the graphite, the polyacrylic acid, the carboxymethyl cellulose, the styrene-butadiene rubber, and the carbon nanotube was 30:69.6:0.1:0.1:0.1:0.1.

In Example 27, the mass ratio of the silicon-based material, the graphite, the polyacrylic acid, the carboxymethyl cellulose, the styrene-butadiene rubber, and the carbon nanotube was 20:79.2:0.8:0.0:0.0:0.0.

In Example 28, the mass ratio of the silicon-based material, the graphite, the polyacrylic acid, the carboxymethyl cellulose, the styrene-butadiene rubber, and the carbon nanotube was 20:79.2:0.0:0.8:0.0:0.0.

In Example 29, the mass ratio of the silicon-based material, the graphite, the polyacrylic acid, the carboxymethyl cellulose, the styrene-butadiene rubber, and the carbon nanotube was 20:79.2:0.4:0.2:0.2:0, but a carbon nanotube as a conductive agent was added during the dry mixing process in the subsequent preparation step (2) of the negative electrode.

### Comparative Example 1

Comparative Example 1 was different from Example 1 in that, in the step (1), the aperture size of the atomizer for the atomization and granulation and the ball-milling and sieving steps were adjusted to obtain the first negative electrode active material and the second negative electrode active material with different volume median particle sizes Dv50, so as to change the volume median particle size Dv50 (A) of the first negative electrode active material and/or the volume median particle size Dv50 (B) of the second negative electrode active material.

### Comparative Example 2

Comparative Example 2 was different from Example 1 in that the mass ratio of the first negative electrode active material, the second negative electrode active material, and the polytetrafluoroethylene in the step (2) was adjusted.

In Comparative Example 2, the mass ratio of the first negative electrode active material, the second negative electrode active material, and the polytetrafluoroethylene was 15:84.95:0.05.

### Comparative Example 3

Comparative Example 3 was different from Example 1 in that Comparative Example 3 did not involve the first negative electrode active material.

In Comparative Example 3, a mass ratio of the second negative electrode active material to the polytetrafluoroethylene was 95:5.

### Comparative Example 4

Comparative Example 4 was different from Example 1 in that Comparative Example 4 did not involve the second negative electrode active material.

In Comparative Example 4, a mass ratio of the first negative electrode active material to the polytetrafluoroethylene was 95:5.

**Table 1 Relevant parameters for Examples 1 to 21 and Comparative Examples 1 and 2**

| | A, µm | B, µm | X, | N, MPa | C, % | (A+B)×X/( N×C) | D, % | E, % |
|---|---|---|---|---|---|---|---|---|
| Example 1 | 4 | 20 | 0.2 | 0.3 | 5 | 3.2 | 15 | 80 |
| Example 2 | 4 | 20 | 0.2 | 0.3 | 0.1 | 160 | 15 | 80 |
| Example 3 | 4 | 20 | 0.2 | 0.3 | 2 | 8 | 15 | 80 |
| Example 4 | 4 | 20 | 0.2 | 0.3 | 8 | 2 | 15 | 80 |
| Example 5 | 4 | 20 | 0.2 | 0.3 | 10 | 1.6 | 15 | 80 |
| Example 6 | 2 | 20 | 0.1 | 0.3 | 5 | 1.47 | 15 | 80 |
| Example 7 | 1 | 20 | 0.05 | 0.3 | 5 | 0.7 | 15 | 80 |
| Example 8 | 8 | 20 | 0.4 | 0.3 | 5 | 7.47 | 15 | 80 |
| Example 9 | 4 | 10 | 0.4 | 0.3 | 5 | 3.73 | 15 | 80 |
| Example 10 | 4 | 25 | 0.16 | 0.3 | 5 | 3.09 | 15 | 80 |
| Example 11 | 4 | 30 | 0.133 | 0.3 | 5 | 3.02 | 15 | 80 |
| Example 12 | 1 | 30 | 0.033 | 0.3 | 5 | 0.69 | 15 | 80 |
| Example 13 | 8 | 10 | 0.8 | 0.3 | 5 | 9.6 | 15 | 80 |
| Example 14 | 4 | 20 | 0.2 | 0.1 | 5 | 9.6 | 15 | 80 |
| Example 15 | 4 | 20 | 0.2 | 0.2 | 5 | 4.8 | 15 | 80 |
| Example 16 | 4 | 20 | 0.2 | 0.4 | 5 | 2.4 | 15 | 80 |
| Example 17 | 4 | 20 | 0.2 | 0.5 | 5 | 1.92 | 15 | 80 |
| Example 18 | 4 | 20 | 0.2 | 0.3 | 5 | 3.2 | 1 | 94 |
| Example 19 | 4 | 20 | 0.2 | 0.3 | 5 | 3.2 | 10 | 85 |
| Example 20 | 4 | 20 | 0.2 | 0.3 | 5 | 3.2 | 20 | 75 |
| Example 21 | 4 | 20 | 0.2 | 0.3 | 5 | 3.2 | 30 | 65 |
| Comparative Example 1 | 0.4 | 8 | 0.05 | 0.3 | 5 | 0.28 | 15 | 80 |
| Comparative Example 2 | 4 | 20 | 0.2 | 0.3 | 0.08 | 200 | 15 | 80 |

### Performance testing

### Cycling testing method and direct current resistance (DCR) testing method:

Testing environment: temperature chamber at 25°C. Specific testing steps were as follows:
Step 1: discharging a secondary battery at 0.2 C to 3.0 V, and standing for 5 min;
Step 2: charging the secondary battery at 0.5 C to 4.5 V with a cut-off rate of 0.02 C, and standing for 5 min;
Step 3: discharging the secondary battery at a constant current of 1 A for 500 ms, and standing for 5 min;
Step 4: discharging the secondary battery at 0.2 C to 3.0 V and standing for 5 min;
Step 5: charging the secondary battery at 0.5 C to 4.5 V with a cut-off rate of 0.02 C, and standing for 5 min;
Step 6: discharging the secondary battery at 0.2 C to 3.0 V, standing for 5 min, and recording a corresponding discharge capacity as CapO;
Step 7: charging the secondary battery at 1.5 C to 4.5 V with a cut-off rate of 0.02 C, and standing for 5 min;
Step 8: discharging the secondary battery at 0.7 C to 3.0 V and standing for 5 min;
Step 9: charging the secondary battery at 0.5 C to 3.0 V with a cut-off rate of 0.02 C, and standing for 5 min;
Step 10: discharging the secondary battery at a constant current of 1 A for 500 ms, standing for 5 min, and recording DCR (1 A-500 ms);
   repeating Steps 7 and 8 for 800 cycles in total, and recording a capacity per cycle as Cap1.

A capacity retention rate for each cycle was calculated as Cap1/Cap0.

**Table 2 Performance testing results for secondary batteries prepared in Examples 1 to 29 and Comparative Examples 1 to 4**

| | Capacity retention rate (%) | DCR growth rate (%) |
|---|---|---|
| Example 1 | 83.7 | 72.6 |
| Example 2 | 79.1 | 77.5 |
| Example 3 | 83.5 | 67.2 |
| Example 4 | 82.8 | 74.3 |
| Example 5 | 81.8 | 78.5 |
| Example 6 | 82.5 | 73.0 |
| Example 7 | 79.0 | 77.3 |
| Example 8 | 81.0 | 74.1 |
| Example 9 | 80.1 | 64.1 |
| Example 10 | 82.2 | 62.1 |
| Example 11 | 80.8 | 65.7 |
| Example 12 | 79.5 | 77.7 |
| Example 13 | 81.1 | 63.6 |
| Example 14 | 80.9 | 65.1 |
| Example 15 | 82.9 | 63.5 |
| Example 16 | 83.1 | 63.1 |
| Example 17 | 80.2 | 70.8 |
| Example 18 | 79.9 | 70.8 |
| Example 19 | 84.1 | 65.7 |
| Example 20 | 82.2 | 67.5 |
| Example 21 | 79.8 | 70.5 |
| Example 22 | 83.0 | 60.5 |
| Example 23 | 80.1 | 65.2 |
| Example 24 | 78.2 | 69.7 |
| Example 25 | 76.5 | 71.5 |
| Example 26 | 75.2 | 73.2 |
| Example 27 | 73.3 | 73.6 |
| Example 28 | 72.2 | 73.1 |
| Example 29 | 72.5 | 81.1 |
| Comparative Example 1 | 68.2 | 81.5 |
| Comparative Example 2 | 69.1 | 86.5 |
| Comparative Example 3 | 69.2 | 82.5 |
| Comparative Example 4 | 65.9 | 84.5 |

As shown in Table 2, by controlling the volume median particle sizes Dv50 of the first negative electrode active material and the second negative electrode active material in the negative electrode active material, the grading ratio (X) of the negative electrode active material, the tensile strength of the negative electrode, and the content of the first binder in the negative electrode active material layer to satisfy the following relationship: 0.69 ≤ (A + B) × X/(N × C) ≤ 160, the present disclosure can effectively enhance the adhesion and electrical conductivity of the negative electrode, effectively suppress the expansion and contraction of the negative electrode active material, boost the ion conductivity of the negative electrode, improve the dispersion effect of the first binder to avoid agglomeration, and reduce the amount of lithium fluoride generated on the surface of the negative electrode. In addition, the present disclosure can improve the stability of the negative electrode active material, prevent the pulverization of the negative electrode and the fragmentation of the negative electrode active material during the fabrication of the negative electrode, increase the compaction density, facilitate the uniform distribution of the negative electrode active material on the negative electrode, and shorten the migration and diffusion path of active ions in the negative electrode active material, thereby reducing the resistance of the secondary battery and effectively improving the first-cycle Coulombic efficiency and cycling performance of the secondary battery.

According to the comparison of Examples 2 and 12 with other examples, it can be seen that the present disclosure can further reduce the resistance of the secondary battery and improve the cycling performance of the secondary battery by controlling the aforementioned parameters to satisfy the following relationship: 1.6 ≤ (A + B) × X/(N × C) ≤ 9.6.

According to the comparison of Examples 1 to 5, it can be seen that the present disclosure further improves the cycling performance of the secondary battery and reduces the resistance of the secondary battery by controlling the weight percentage C of the first binder in the negative electrode active material layer to satisfy a relationship of 2% ≤ C ≤ 8%.

According to the comparison of Example 1 with Examples 6 to 8, it can be seen that the present disclosure further improves the cycling performance of the secondary battery and reduces the resistance of the secondary battery by controlling the volume median particle size Dv50 (A) of the first negative electrode active material to satisfy a relationship of 2 µm ≤ A ≤ 4 µm.

According to the comparison of Example 1 with Examples 9 to 11, it can be seen that the present disclosure further improves the cycling performance of the secondary battery and reduces the resistance of the secondary battery by controlling the volume median particle size Dv50 (B) of the second negative electrode active material to satisfy a relationship of 20 µm ≤ B ≤ 25 µm.

According to the comparison of Example 1 with Examples 14 to 17, it can be seen that the present disclosure further improves the cycling performance of the secondary battery and reduces the resistance of the secondary battery by controlling the tensile strength N of the negative electrode to satisfy a relationship of 0.2 MPa ≤ N ≤ 0.4 MPa.

According to the comparison of Example 1 with Examples 18 to 21, it can be seen that the present disclosure further improves the cycling performance of the secondary battery and reduces the resistance of the secondary battery by controlling the weight percentage D of the first negative electrode active material in the negative electrode active material layer and the weight percentage E of the second negative electrode active material in the negative electrode active material layer to satisfy relationships of 10% ≤ D ≤ 20% and 75% ≤ E ≤ 85%.

According to the comparison of Example 1 with Examples 24 to 26, it can be seen that the present disclosure further improves the cycling performance of the secondary battery and reduces the resistance of the secondary battery by controlling the mass ratio of the silicon-based material, the graphite, the second binder, and the conductive agent at (2-20):(79.2-94.8):(0.6-2.4):(0.2-0.8).

According to the comparison of Example 1 with Examples 27, 28, and 29, it can be seen that the present disclosure further improves the cycling performance of the secondary battery and reduces the resistance of the secondary battery by controlling the mass ratio of the silicon-based material, the graphite, the second binder, and the conductive agent at (1-30):(69.4-95):(0.3-3):(0.1-1).

Finally, it should be noted that the above embodiments are merely intended to illustrate the technical solutions of the present disclosure, rather than to limit the protection scope of the present disclosure. Although the present disclosure is described in detail with reference to preferred embodiments, those of ordinary skill in the art should understand that various modifications or equivalent substitutions may be made to the technical solutions of the present disclosure without departing from the essence and scope of the technical solutions of the present disclosure.

## Claims

1. A negative electrode, comprising: a negative electrode current collector and a negative electrode active material layer arranged on at least one surface of the negative electrode current collector, wherein the negative electrode active material layer comprises a negative electrode active material and a first binder;
the negative electrode active material comprises a first negative electrode active material and a second negative electrode active material; and
the negative electrode satisfies a relationship of 0.69 ≤ (A + B) × X/(N × C) ≤ 160, and X = A/B;
wherein A represents a volume median particle size Dv50 of the first negative electrode active material, in µm;
B represents a volume median particle size Dv50 of the second negative electrode active material, in µm;
N represents a tensile strength of the negative electrode, in MPa; and
C represents a weight percentage of the first binder in the negative electrode active material layer, in %.

2. The negative electrode according to claim 1, wherein the negative electrode satisfies at least one selected from the group consisting of following (1) to (5): $0.4 μm \leq A \leq 8 μm ;$ $10 μm \leq B \leq 45 μm ;$ $0.01 \leq X \leq 0.8 ;$ $0.1 MPa \leq N \leq 0.5 MPa ;$ and $0.05 % \leq C \leq 10 % .$

3. The negative electrode according to claim 1 or 2, wherein the first binder comprises at least one selected from the group consisting of polytetrafluoroethylene and/or a derivative thereof, polyvinylidene fluoride (PVDF) and/or a derivative thereof, carboxymethyl cellulose and/or a derivative thereof, nitrocellulose and/or a derivative thereof, styrene-butadiene rubber and/or a derivative thereof, nitrile-butadiene rubber and/or a derivative thereof, and polyacrylic acid and/or a derivative thereof.

4. The negative electrode according to any one of claims 1 to 3, wherein a weight percentage of the first negative electrode active material in the negative electrode active material layer is defined as D, and 1% ≤ D ≤ 30%; and/or
a weight percentage of the second negative electrode active material in the negative electrode active material layer is defined as E, and 60% ≤ E ≤ 98.9%.

5. The negative electrode according to any one of claims 1 to 4, wherein the negative electrode active material comprises a core and a coating layer arranged on an outer surface of the core; the core comprises a silicon-based material and graphite; the coating layer comprises a second binder and a conductive agent; and a mass ratio of the silicon-based material, the graphite, the second binder, and the conductive agent is (1-30):(69.4-95):(0.3-3):(0.1-1).

6. The negative electrode according to claim 5, wherein the coating layer comprises polyacrylic acid and/or a derivative thereof, styrene-butadiene rubber and/or a derivative thereof, carboxymethyl cellulose and/or a derivative thereof, and the conductive agent; and a mass ratio of the silicon-based material, the graphite, the polyacrylic acid and/or the derivative thereof, the styrene-butadiene rubber and/or the derivative thereof, the carboxymethyl cellulose and/or the derivative thereof, and the conductive agent is (1-30):(69.4-95):(0.1-1):(0.1-1):(0.1-1):(0.1-1).

7. The negative electrode according to claim 5 or 6, wherein the silicon-based material comprises at least one selected from the group consisting of a silicon-oxygen material, a silicon-carbon material, and nano-silicon.

8. The negative electrode according to any one of claims 5 to 7, wherein the conductive agent comprises at least one selected from the group consisting of a carbon nanotube, carbon black, a carbon dot, graphene, and a carbon nanofiber.

9. The negative electrode according to any one of claims 5 to 8, wherein the second binder comprises at least one selected from the group consisting of polytetrafluoroethylene and/or a derivative thereof, PVDF and/or a derivative thereof, carboxymethyl cellulose and/or a derivative thereof, nitrocellulose and/or a derivative thereof, styrene-butadiene rubber and/or a derivative thereof, nitrile-butadiene rubber and/or a derivative thereof, and polyacrylic acid and/or a derivative thereof.

10. A secondary battery, comprising the negative electrode according to any one of claims 1 to 9.

11. An electric device, comprising the secondary battery according to claim 10.
